# EUROPEAN PATENT APPLICATION

(11) **EP 4 831 031 A1**
(43) Date of publication of application: **28.10.2026**
(21) Application number: 25801137.8
(22) Date of filing: 28.02.2025
(51) Int. Cl.: B60W 60/00, B60W 50/00, G05B 13/04

(54) **DRIVING DECISION GENERATION METHOD AND APPARATUS, MODEL TRAINING METHOD AND APPARATUS, AND DEVICE AND STORAGE MEDIUM**

(71) Applicant: SZ Zhuoyu Technology Co., Ltd., Shenzhen, Guangdong 518055 (CN)
(72) Inventor: LI, Peiliang, Shenzhen, Guangdong 518055 (CN); WANG, Halfbullet, Shenzhen, Guangdong 518055 (CN); CHEN, Xiaozhi, Shenzhen, Guangdong 518055 (CN); LIU, Perdon, Shenzhen, Guangdong 518055 (CN)
(74) Representative: Bandpay & Greuter
(86) International application number: PCT/CN2025/079701
(87) International publication number: WO 2026/178817

(57) **Abstract**

The present application proposes a driving decision generation method, a model training method, an apparatus, a device, and a storage medium, and relates to the field of intelligent driving technologies. The method includes: processing voice data input by a user and pre-acquired driving environment information based on a data processing model to generate a driving decision; and controlling an autonomous mobile device to drive according to the driving decision. The data processing model is obtained by training based on a reinforcement learning model, or is obtained by training based on a multi-modal model and a deep learning model. Through the above method, personalized processing of voice data can be achieved, thereby generating the driving decision which better meets personalized user needs, and improving the control flexibility and user experience of an intelligent driving system.

## Description

### TECHNICAL FIELD

The present application relates to the field of intelligent driving technologies, and in particular, to a driving decision generation method, a model training method, an apparatus, a device, and a storage medium.

### BACKGROUND

With the rapid development of intelligent driving technology, an autonomous mobile device equipped with an intelligent driving system can comprehensively analyze data from various sensors, such as a radar, a lidar, and an ultrasonic sensor, so as to comprehensively perceive the surrounding environment, thereby processing complex traffic conditions in real time, recognizing road signs, pedestrians as well as other vehicles, and making intelligent path planning and speed adjustments according to current traffic rules and environmental conditions.

In the related art, a user may interact with the intelligent driving system through a pre-integrated driving decision interactive interface (such as lever-controlled lane changing, lever-controlled speed adjustment, and lever-controlled distance adjustment), allowing the user to control the vehicle in different driving scenarios. However, the pre-integrated interactive interface is generally standardized and has a single type of adjustment, which may cause a problem of insufficient flexibility of the intelligent driving system in adapting to personalized user needs.

### SUMMARY

The present application provides a driving decision generation method, a model training method, an apparatus, a device, and a storage medium, aiming to improve the flexibility of the intelligent driving system in adapting to personalized user needs.

According to a first aspect, the present application provides a driving decision generation method, including:
processing voice data input by a user and pre-acquired driving environment information based on a data processing model to generate a driving decision; where the data processing model is obtained by training based on a reinforcement learning model, or is obtained by training based on a multi-modal model and a deep learning model;
controlling an autonomous mobile device to drive according to the driving decision.

In a possible implementation, the processing the voice data input by the user and the pre-acquired driving environment information based on the data processing model to generate the driving decision includes:
processing the voice data input by the user and the pre-acquired driving environment information based on a visual language large model to obtain a target feature vector, where the target feature vector is used to represent at least one of the following features: a driving intention feature of the user, a category feature of a driving scenario, a driving style feature, and a state feature of the autonomous mobile device;
processing the target feature vector through a driver-assistance model to generate the driving decision;
where the data processing model is obtained by combining the visual language large model and the driver-assistance model.

In a possible implementation, the method further includes:
pushing execution information of the driving decision to the user, where the execution information includes a current operation being executed by the autonomous mobile device and/or an expected operation to be executed.

In a possible implementation, the method further includes:
acquiring driving environment information collected during a movement process of the autonomous mobile device, where the driving environment information includes at least one of the following: motion state information of the autonomous mobile device, motion state information of a surrounding traffic participant, and road information;
acquiring the voice data input by the user through an audio collecting device in the autonomous mobile device.

In a possible implementation, the voice data includes a control instruction and/or a driving style instruction; where
the control instruction includes at least one of the following: increasing a driving speed, decreasing the driving speed, overtaking a preceding target, bypassing an obstacle, selecting a target road, driving into an auxiliary lane, and parking at a target area;
the driving style instruction includes at least one of the following: a driving preference of the user, a state of the autonomous mobile device, a state of the user, and a time limit requirement for a driving task.

In a possible implementation, the driving decision includes at least one of the following: driving path planning, speed adjustment, overtaking, obstacle avoidance, driving into a target lane, driving into an auxiliary lane, lane keeping, parking, and emergency braking.

In a possible implementation, the method further includes:
receiving the data processing model sent by a server, and deploying the data processing model.

According to a second aspect, the present application provides a model training method for a driving decision, where a data processing model is obtained by training based on a multi-modal model and a deep learning model, and the method includes:
acquiring a plurality of first training samples, where each first training sample includes to-be-processed data and a driving scenario label corresponding to the to-be-processed data; where the to-be-processed data includes voice data input by a user and driving environment information, and the driving environment information includes at least one of the following: motion state information of an autonomous mobile device, motion state information of a surrounding traffic participant, and road information;
training the multi-modal model according to the plurality of first training samples to obtain a visual language large model;
constructing a plurality of second training samples according to a feature vector corresponding to each first training sample and a driving decision corresponding to each first training sample, where each second training sample includes the feature vector corresponding to one first training sample and the driving decision corresponding to the first training sample;
training the deep learning model according to the plurality of second training samples to obtain a driver-assistance model;
combining the visual language large model and the driver-assistance model to obtain the data processing model.

In a possible implementation, the driving scenario label includes a category of a driving scenario and a state of the autonomous mobile device, where the category of the driving scenario is any one of the following: overtaking, detouring, accelerating, decelerating, or lane changing; and the state of the autonomous mobile device includes: a preparation state, an execution state, or a completion state.

In a possible implementation, the data processing model is obtained by training based on a reinforcement learning model, and the method further includes:
acquiring a plurality of training samples, where each training sample includes to-be-processed data and a driving decision corresponding to the to-be-processed data; where the to-be-processed data includes voice data input by a user and driving environment information, and the driving environment information includes at least one of the following: motion state information of an autonomous mobile device, motion state information of a surrounding traffic participant, and road information;
training the reinforcement learning model according to the plurality of training samples to obtain the data processing model.

In a possible implementation, the method further includes:
sending the data processing model to at least one autonomous mobile device.

According to a third aspect, the present application provides a driving decision generation apparatus, including:
a first processing module, configured to process voice data input by a user and pre-acquired driving environment information based on a data processing model to generate a driving decision; where the data processing model is obtained by training based on a reinforcement learning model, or is obtained by training based on a multi-modal model and a deep learning model;
a second processing module, configured to control an autonomous mobile device to drive according to the driving decision.

According to a fourth aspect, the present application provides a model training apparatus for a driving decision, including:
an acquiring module, configured to acquire a plurality of first training samples, where each first training sample includes to-be-processed data and a driving scenario label corresponding to the to-be-processed data; where the to-be-processed data includes voice data input by a user and driving environment information, and the driving environment information includes at least one of the following: motion state information of an autonomous mobile device, motion state information of a surrounding traffic participant, and road information;
a first training module, configured to train a multi-modal model according to the plurality of first training samples to obtain a visual language large model;
a constructing module, configured to construct a plurality of second training samples according to a feature vector corresponding to each first training sample and a driving decision corresponding to each first training sample, where each second training sample includes the feature vector corresponding to one first training sample and the driving decision corresponding to the first training sample;
a second training module, configured to train a deep learning model according to the plurality of second training samples to obtain a driver-assistance model;
a combining module, configured to combine and process the visual language large model and the driver-assistance model to obtain the data processing model.

According to a fifth aspect, the present application provides an electronic device, including: a processor, a memory, and a communication interface; where
the memory stores computer execution instructions;
the processor executes the computer execution instructions stored in the memory to implement the method according to any one of the first aspect.

According to a sixth aspect, the present application provides an autonomous mobile device, including: the electronic device according to the fifth aspect.

According to a seventh aspect, the present application provides a server, including: a processor, a memory, and a communication interface; where
the memory stores computer execution instructions;
the processor executes the computer execution instructions stored in the memory to implement the method according to any one of the second aspect.

According to an eighth aspect, the present application provides a computer-readable storage medium, where the computer-readable storage medium stores computer execution instructions which, when being executed by a processor, are used to implement the method according to any one of the first aspect or the second aspect.

According to a ninth aspect, the present application provides a program product, including a computer program, and when the program product runs on a computer, the computer is enabled to implement the method according to any one of the first aspect or the second aspect.

According to a tenth aspect, the present application provides a computer program which, when being executed by a processor, is used to implement the method according to any one of the first aspect or the second aspect.

The present application provides the driving decision generation method, the model training method, the apparatus, the device, and the storage medium, including processing the voice data input by the user and the pre-acquired driving environment information based on the data processing model to generate the driving decision, and controlling the autonomous mobile device to drive according to the driving decision. The data processing model is obtained by training based on the reinforcement learning model, or is obtained by training based on the multi-modal model and the deep learning model. In the above process, a driving decision that better meets personalized user needs can be generated by using a natural language interaction method in combination with the driving environment information pre-acquired by the autonomous mobile device, thereby improving the flexibility of the intelligent driving system in adapting to the personalized user needs.

### BRIEF DESCRIPTION OF THE DRAWINGS

The accompanying drawings herein are incorporated into the specification and form part of the specification, illustrating embodiments consistent with the present application and used together with the specification to explain the principles of the present application.
FIG. 1 is a schematic diagram of an application scenario according to an embodiment of the present application.
FIG. 2 is a schematic flow chart of a first embodiment of a driving decision generation method according to the present application.
FIG. 3 is a schematic flow chart of a second embodiment of a driving decision generation method according to the present application.
FIG. 4 is a schematic flow chart of a first embodiment of a model training method for a driving decision according to the present application.
FIG. 5 is a schematic structural diagram of a multi-modal model according to an embodiment of the present application.
FIG. 6 is a schematic flow chart of a second embodiment of a model training method for a driving decision according to the present application.
FIG. 7 is a schematic example diagram of training and application of a data processing model according to an embodiment of the present application.
FIG. 8 is a schematic structural diagram of a first embodiment of a driving decision generation apparatus according to the present application.
FIG. 9 is a schematic structural diagram of a second embodiment of a driving decision generation apparatus according to the present application.
FIG. 10 is a schematic structural diagram of a first embodiment of a model training apparatus for a driving decision according to the present application.
FIG. 11 is a schematic structural diagram of a second embodiment of a model training apparatus for a driving decision according to the present application.
FIG. 12 is a schematic structural diagram of an electronic device according to an embodiment of the present application.
FIG. 13 is a schematic structural diagram of a server according to an embodiment of the present application.

### DESCRIPTION OF EMBODIMENTS

The term "and/or" in the embodiments of the present application describes the association relationship of the associated objects, and indicates that there can be three types of relationships. For example, A and/or B may indicate three cases: A exists alone, A and B exist simultaneously, and B exists alone. The character "/" generally indicates that the related objects before and after the character are in an "or" relationship.

The term "a plurality of" in the embodiments of the present application refers to two or more, and other terms are similar thereto.

In order to make the objectives, technical solutions, and advantages of the embodiments of the present application clearer, the technical solutions in the embodiments of the present application will be clearly and completely described below with reference to the accompanying drawings in the embodiments of the present application. Obviously, the described embodiments are merely some rather than all of the embodiments of the present application. Based on the embodiments in the present application, all other embodiments obtained by those ordinary skilled in the art without creative efforts are within the protection scope of the present application.

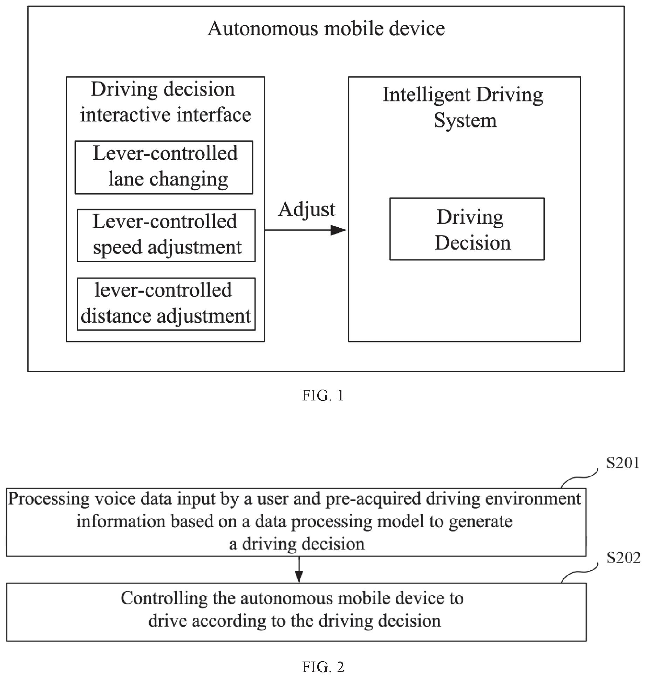

FIG. 1 is a schematic diagram of an application scenario according to an embodiment of the present application. Please refer to FIG. 1. A driving decision interactive interface and an intelligent driving system may be pre-integrated in an autonomous mobile device. When the intelligent driving system is operating, a user may adjust a driving decision generated by the intelligent driving system through the driving decision interactive interface, so that the user can adjust a driving behavior of the device in a variable traffic environment to adapt to current road conditions and personal preferences.

Optionally, the autonomous mobile device may be a device that can move and is configured with the intelligent driving system, such as a flying car, an intelligent driving vehicle, a movable robot, an intelligent ship, etc.

For example, in the application scenario of the intelligent driving vehicle, when the intelligent driving system is operating, the user may adjust a following distance of the intelligent driving vehicle during driving through the lever-controlled distance adjustment, thereby improving the safety and comfort of driving.

In the related art, the pre-integrated driving decision interactive interface is generally standardized, and has a single type of adjustment. When interacting with the intelligent driving system, only limited options can be generally used to adjust the driving behavior of the vehicle, which may cause the intelligent driving system to have a problem of insufficient flexibility in adapting to the personalized user needs.

In view of the above problems, the inventors consider generating a driving decision that better meets personalized user needs by using a natural language interaction method in combination with the driving environment information acquired by the autonomous mobile device. Accordingly, the inventors have acquired through multiple experiments that a more efficient and personalized driving experience can be achieved by processing voice data input by a user and pre-acquired driving environment information through a data processing model, which is obtained by training based on a reinforcement learning model or based on a multi-modal model and a deep learning model, to generate a driving decision and control the autonomous mobile device to drive. On this basis, the present application proposes a driving decision generation method, which aims to improve the flexibility of the intelligent driving system, so as to better adapt to personalized user needs.

The technical solutions of the present application and how to solve the above technical problems through the technical solutions of the present application will be described in detail below with reference to specific embodiments. The following several specific embodiments may be combined with each other, and the same or similar concepts or procedures may not be repeated in certain embodiments. The embodiments of the present application will be described below with reference to the accompanying drawings.

FIG. 2 is a schematic flow chart of a first embodiment of a driving decision generation method according to the present application. Please refer to FIG. 2, the method includes the following step.

S201, processing voice data input by a user and pre-acquired driving environment information based on a data processing model to generate a driving decision.

The executive entity of the embodiments of the present application may be an electronic device, and may also be a driving decision generation apparatus provided in the electronic device. The driving decision generation apparatus may be implemented through software, or a combination of software and hardware. The driving decision generation apparatus may be a processor in the electronic device. For ease of understanding, the following description uses an example in which the executive entity is the electronic device for illustration.

In this step, the electronic device may perform comprehensive analysis on the voice data input by the user and the pre-acquired driving environment information based on the pre-acquired data processing model, to generate the driving decision that meets current driving environment and user needs. The data processing model is obtained by training based on a reinforcement learning model, or is obtained by training based on a multi-modal model and a deep learning model.

For ease of understanding, an intelligent driving vehicle is hereinafter used as an example of the autonomous mobile device for illustration.

Regarding the voice data, it may refer to audio signals provided by the user to the electronic device in the form of voice in the context of driving decision generation, and these signals may include a control instruction and/or a driving style instruction.

Optionally, the control instruction may include at least one of the following: increasing a driving speed, decreasing the driving speed, overtaking a preceding target, bypassing an obstacle, selecting a target road, entering an auxiliary lane, and parking at a target area.

Optionally, the driving style instruction may include at least one of the following: a driving preference of the user, a state of the autonomous mobile device, a state of the user, and a time limit requirement for a driving task.

Regarding the driving environment information, it may refer to detailed information of current driving conditions and surrounding environment of the autonomous mobile device that is acquired by the electronic device through various sensors and data sources, and may include at least one of the following: motion state information of the autonomous mobile device, motion state information of a surrounding road traffic participant, and road information.

Regarding the driving decision, it may be a specific operating scheme that is generated by the data processing model after performing comprehensive processing on the voice data and the driving environment information, and is used to guide the actual driving behavior of the autonomous mobile device.

In an optional implementation, the driving decision may include at least one of the following: driving path planning, speed adjustment, overtaking, obstacle avoidance, driving into a target lane, driving into an auxiliary lane, lane keeping, parking, and emergency braking.

The reinforcement learning model is a learning framework for training through trial-and-error and feedback mechanisms. In this model, the autonomous mobile device, as an intelligent agent, can continuously interact with the environment in which the autonomous mobile device is located, so as to perceive environmental states, and make a series of action decisions in combination with the voice data input of the user. For example, the reinforcement learning model may be a learning model employing a deep Q-Network (Deep Q-Network, DQN) structure.

The multi-modal model can enhance the environmental perception of the autonomous mobile device by integrating information from various modalities such as visual data, sensor data, and the voice data input by the user.

The deep learning model is intended to simulate the learning process of the human brain by using a multi-layer neural network structure, and can extract features and patterns from large amounts of data, so as to output a prediction or decision for a specific task. For example, the deep learning model may be a learning model employing a convolutional neural network structure.

It should be noted that the reinforcement learning model may be a unified model obtained by integrating functions of the multi-modal model and the deep learning model.

For example, the data processing model may be obtained by training based on the reinforcement learning model, and the data processing model may process the voice data input by the user and the pre-acquired driving environment information to generate the driving decision. Among them, the voice data may be "overtake the preceding vehicle A"; the driving environment information may include that: the driving speed of the intelligent driving vehicle is 60 kilometers per hour (km/h), the driving speed of the preceding vehicle A is 30 km/h, and there is no other vehicle in the left-side lane of the current lane; and the driving decision may be overtaking, such as outputting a planned overtaking trajectory.

In an optional implementation, a visual language large model may be obtained by training based on the multi-modal model, a driver-assistance model may be obtained by training based on the deep learning model, and then the data processing model may be obtained by combining the visual language large model and the driver-assistance model. Then, based on the visual language large model, the voice data input by the user and the pre-acquired driving environment information may be processed to obtain a target feature vector, and the target feature vector is processed by the driver-assistance model to generate the driving decision. The target feature vector may represent at least one of the following features: a driving intention feature of the user, a category feature of a driving scenario, a driving style feature, and a state feature of the autonomous mobile device.

For example, based on the visual language large model, the voice data "overtake the preceding vehicle A" input by the user and the pre-acquired driving environment information including "the driving speed of the intelligent driving vehicle is 60 kilometers per hour (km/h), the driving speed of the preceding vehicle A is 30 km/h, and there is no other vehicle in the left-side lane of the current lane" are processed to obtain a target feature vector 1, and the target feature vector 1 is processed by the driver-assistance model to generate a driving decision. The driving decision may be overtaking.

S202, controlling the autonomous mobile device to drive according to the driving decision.

In this step, the autonomous mobile device may be controlled to drive according to the driving decision generated by the data processing model.

For example, if the driving decision generated by the data processing model is overtaking, then the intelligent driving vehicle may be controlled to overtake the preceding vehicle A based on the overtaking driving decision. For example, the intelligent driving vehicle may change the lane to the left-side lane while keeping the driving speed of 60 km/h, so as to overtake the vehicle A that is driving at the speed of 30 km/h in the current lane.

In the embodiments of the present application, the electronic device can utilize the data processing model, which is obtained by training through the reinforcement learning model or through the multi-modal model and the deep learning model, to process the voice data input by the user and the pre-acquired driving environment information to generate the driving decision, and control the autonomous mobile device to drive. In the above process, by analyzing the voice data input by the user, the data processing model can generate a personalized driving decision, so as to better meet the preferences and needs of the user.

Still further, using the driving decision generation method provided in the embodiments of the present application, the fine-grained control of the autonomous mobile device can be achieved through simple voice data from the user, without being constrained by the conventional standardized interface (such as lever-controlled lane changing, lever-controlled speed adjustment, and lever-controlled distance adjustment), thereby improving the flexibility and adaptability of the intelligent driving system, better meeting the personalized user needs, and providing a more natural and intuitive user experience.

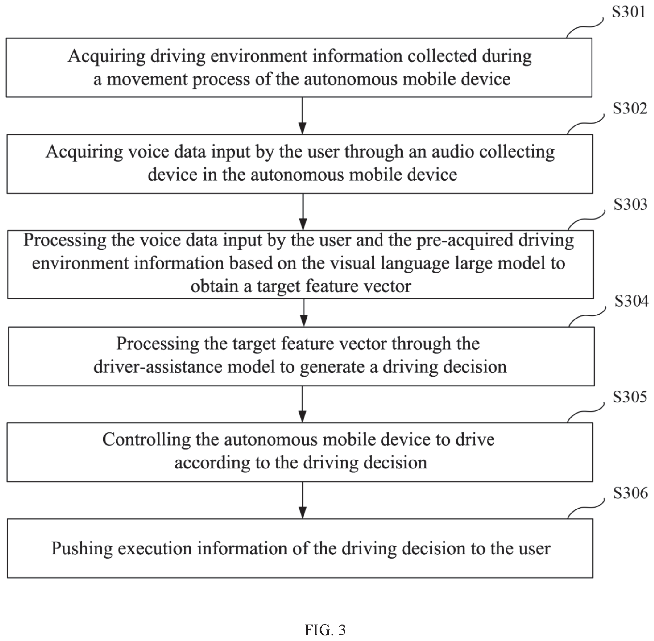

On the basis of the embodiment shown in FIG. 2, the driving decision generation method mentioned above will be further explained below in detail with reference to FIG. 3.

FIG. 3 is a schematic flow chart of a second embodiment of a driving decision generation method according to the present application. Please refer to FIG. 3. A data processing model is obtained by combining a visual language large model and a driver-assistance model. The method includes the following steps.

S301, acquiring driving environment information collected during a movement process of the autonomous mobile device.

In this step, the electronic device may acquire the driving environment information collected during the movement process of the autonomous mobile device, where the driving environment information includes at least one of the following: motion state information of the autonomous mobile device, motion state information of a surrounding traffic participant, and road information.

The motion state information of the autonomous mobile device may include, but is not limited to, current position, driving speed, acceleration magnitude, driving direction, vehicle attitude (pitch angle, roll angle, yaw angle), current lane position, and power system state (such as battery level, fuel level). For example, the motion state information of the autonomous mobile device may be acquired through sensors and other components installed on the autonomous mobile device.

The motion state information of the surrounding traffic participant may include, but is not limited to, distance and direction of the surrounding traffic participant relative to the autonomous mobile device, relative speed, driving direction, and type of the traffic participant (such as vehicle, pedestrian, bicycle). For example, the motion state information of the surrounding traffic participant may be acquired by collecting an environmental image, a point cloud or other data around the autonomous mobile device.

The road information may include road type (such as highway, urban road, rural road), lane width, road condition (such as slippery, bumpy, icy), road sign and marking (such as speed limit sign, parking sign, lane line), traffic light state, intersection information (such as crossing, roundabout), and terrain information (such as slope, curve radius). For example, the road information may be acquired through navigation or map data.

For example, the electronic device may acquire the driving environment information collected during the movement process of the intelligent driving vehicle, where the driving environment information includes that: the driving speed of the intelligent driving vehicle is 60 km/h, the driving speed of the vehicle A is 30 km/h, the vehicle A and the intelligent driving vehicle are driving in the same lane (the current lane), the vehicle A is driving in front of the intelligent driving vehicle, and there is no other traffic participant in the left-side lane of the current lane; and the current lane and the left-side lane are both urban roads.

S302, acquiring voice data input by the user through an audio collecting device in the autonomous mobile device.

In this step, the electronic device may acquire the voice data input by the user through the audio collecting device in the autonomous mobile device.

Optionally, the voice data input by the user may be acquired through a built-in microphone in the autonomous mobile device or an external microphone, where the voice data includes a control instruction and/or a driving style instruction.

The control instruction includes at least one of the following: increasing a driving speed, decreasing the driving speed, overtaking a preceding target, bypassing an obstacle, selecting a target road, driving into an auxiliary lane, and parking at a target area.

For example, when the user is not satisfied with the driving speed of the intelligent driving vehicle, the user may issue the instruction of increasing the driving speed or decreasing the driving speed; when there is a vehicle driving slowly in front of the intelligent driving vehicle, the user may issue the instruction of overtaking the preceding vehicle; when there is a temporary obstacle (such as a construction area or a parked vehicle) on the road, the user may issue the instruction of bypassing the obstacle; when the user wishes to change the current route to select a faster or more preferred road, the user may issue the instruction of selecting the target road; when the user wishes the vehicle to drive into the auxiliary lane of the highway for an upcoming exit or for a slower driving speed, the user may issue the instruction of driving into the auxiliary lane; and when the user wishes to park at a particular position (such as a store entrance or a parking lot), the user may issue the instruction of parking at the target area.

The driving style instruction includes at least one of the following: a driving preference of the user, a state of the autonomous mobile device, a state of the user, and a time limit requirement for a driving task.

Regarding the driving preference of the user, it may refer to personalized needs and habits of the user for driving experience. For example, the driving style instruction may be: please drive smoothly to the destination.

Regarding the state of the autonomous mobile device, it may refer to the current operating state and health condition of the autonomous mobile device. For example, the driving style instruction may be: the battery is running low.

Regarding the state of the user, it may include current physiological and psychological conditions of the user, such as fatigue level, attention concentration level, emotional state, etc. For example, the driving style instruction may be: I am tired.

Regarding the time limit requirement for the driving task, it may refer to time constraints or deadline requirements related to the current driving task. For example, the driving style instruction may be: time is a bit tight, please drive safely and quickly.

For example, through the built-in microphone in the intelligent driving vehicle, voice data 1 input by the user may be acquired as: overtake the preceding vehicle A.

For another example, through the built-in microphone in the intelligent driving vehicle, voice data 2 input by the user may be acquired as: please drive smoothly to the destination.

S303: processing the voice data input by the user and the pre-acquired driving environment information based on the visual language large model to obtain a target feature vector.

In this step, based on the visual language large model obtained by training based on the multi-modal model, the voice data input by the user and the pre-acquired driving environment information may be processed to obtain the target feature vector. The target feature vector is used to represent at least one of the following features: a driving intention feature of the user, a category feature of a driving scenario, a driving style feature, and a state feature of the autonomous mobile device.

The driving intention feature of the user may refer to a driving target or plan of the user at a particular moment. For example, the user may wish to overtake, change the lane, or exit a highway at a certain exit.

The category feature of the driving scenario may include, but is not limited to: overtaking, detouring, accelerating, decelerating, or lane changing.

The driving style feature may include, but is not limited to: an aggressive style, a sporty style, a cautious style, and a smooth style.

Each driving style feature may correspond to a high-dimensional style vector, where the style vector may be represented by the target feature vector, and each style vector represents a specific driving preference.

For example, a style vector 1 is used to represent the smooth style, prioritizing a comfortable driving experience even at the expense of efficiency; a style vector 2 is used to represent the sporty style, aiming to achieve efficient driving while ensuring safety; a style vector 3 is used to represent the cautious style, which may be a behavior of choosing to yield to others to ensure safety when encountering queue-jumping situations; and a style vector 4 is used to represent the aggressive style, desiring to maintain one's own road rights while ensuring safety, without actively yielding.

It should be understood that the above-mentioned style vectors are only examples, and do not cover all possible driving style features. In practical applications, the driving style feature may be adjusted and expanded according to different driving environments, vehicle types, and personal preferences. Each style vector quantifies the driving behavior tendency or driving preference of the user through specific values in a multi-dimensional feature space, thereby providing a foundation for optimizing personalized driving experience. This representation method of the high-dimensional style vector can help to develop a more intelligent driving assistance system, so as to better adapt to the needs and expectations of different drivers.

The state feature of the autonomous mobile device may include a preparation state, an execution state, or a completion state.

For example, based on the visual language large model, the voice data "overtake the preceding vehicle A" input by the user and the pre-acquired driving environment are processed to obtain a target feature vector 1, where the target feature vector 1 is used to represent that the driving intention feature of the user is overtaking the preceding vehicle A, the category feature of the driving scenario is overtaking, and the state feature of the autonomous mobile device is the preparation state.

For another example, based on the visual language large model, the voice data "please drive smoothly to the destination" input by the user and the pre-acquired driving environment information may be processed to obtain a target feature vector 2, where the target feature vector 2 is used to represent that the driving style feature is the smooth style.

S304, processing the target feature vector through the driver-assistance model to generate a driving decision.

In this step, the driver-assistance model may be an end-to-end model, which can directly output a driving decision (such as a driving trajectory) according to input perceptual data (such as image, point cloud, or other data). Based on the driver-assistance model obtained by training based on the deep learning model, the target feature vector output by the visual language large model may be processed to generate a driving decision, where the driving decision includes at least one of the following: driving path planning, speed adjustment, overtaking, obstacle avoidance, driving into a target lane, driving into an auxiliary lane, lane keeping, parking, and emergency braking.

For example, the target feature vector 1 may be processed based on the driver-assistance model, and the generated driving decisions include a speed adjustment decision and an overtaking decision.

In an optional implementation, the target feature vector obtained based on the visual language large model may be further processed by the driver-assistance model, and the generated driving decision may correspond to one driving style (or driving preference), that is, for each driving style, there may be at least one driving decision. That is, by using the driver-assistance model, the target feature vector (also known as the style vector) can be recognized, and at least one driving decision for the driving style corresponding to the target feature vector can be determined.

For example, the target feature vector 2 may be processed based on the driver-assistance model to generate driving decisions corresponding to the smooth style, and the driving decisions corresponding to the smooth style may include a speed adjustment decision and a lane keeping decision.

It should be understood that the safety is a primary influence factor in the driving decision system of the autonomous mobile device. Therefore, when the voice instruction of the user does not match an operation that can be safely performed in the current scenario, the intelligent driving system will prioritize ensuring safe driving.

For example, the intelligent driving vehicle is driving on an urban road with dual lanes and is located on the right-side lane. The voice data input by the user is "overtake the preceding vehicle A". However, when the driving environment information indicates that there is an obstacle in the left-side lane of the right-side lane, or there is a yellow solid line between the right-side lane and the left-side lane, it means that lane-crossing is prohibited. Although the user wants to overtake the preceding vehicle A, the intelligent driving system (such as the driver-assistance model) may output a lane keeping decision according to requirements of safety and traffic regulations, and temporarily not execute the overtaking operation. The lane keeping decision may include continuing to drive in the right-side lane and keeping a safe distance from the preceding vehicle A. At this time, the intelligent driving system may also provide a voice prompt for the reason why overtaking is currently not possible, in order to remind the user to pay attention to the driving environment and give safety instructions.

S305, controlling the autonomous mobile device to drive according to the driving decision.

In this step, the autonomous mobile device may be controlled to drive based on the driving decision generated by the driver-assistance model.

Optionally, if the driving decision includes a plurality of operations (such as requiring speed adjustment and overtaking simultaneously), these operations may be executed in parallel, and the specific execution sequence may be dynamically adjusted according to real-time traffic conditions and safety.

For example, according to the speed adjustment decision included in the driving decisions, the driving speed of the intelligent driving vehicle may be increased from 60 km/h to 80 km/h, and meanwhile, according to the overtaking decision in the driving decisions, the intelligent driving vehicle may be controlled to change the lane to the left-side lane, and quickly overtake the vehicle A according to the increased driving speed of 80 km/h after changing the lane.

For another example, according to the speed adjustment decision included in the driving decisions, the driving speed of the intelligent driving vehicle may be reduced from 60 km/h to 30 km/h, and meanwhile, according to the lane keeping decision included in the driving decisions, the intelligent driving vehicle may be controlled to follow the preceding vehicle A, so as to drive safely and smoothly.

For still another example, based on the driving style instruction which is "the battery is running low", a driving decision corresponding to the aggressive style may be generated, and the driving decision may include a speed adjustment decision, which may be increasing the driving speed to reach the destination before the battery is depleted. Based on the driving style instruction which is "I'm tired", a driving decision corresponding to the cautious style may be generated, and the driving decision may include a parking decision which may automatically search for a nearest safe parking area for the user to rest. Based on the driving style instruction which is "the time is a bit tight, please drive safely and quickly", a driving decision corresponding to the sporty style may be generated, and the driving decision may include a decision of driving into a target lane, which may be selecting a faster lane or a lane more suitable for the current speed and route.

In an optional implementation, the purpose of voice control of the autonomous mobile device may also be implemented based on a simple language model and rule-based decision planning.

For example, the voice data input by the user is "drive into the nearest gas station". The language model can identify "drive into" as an action instruction, and "the nearest gas station" as a target position. A rule-based decision planning module may combine the current state (such as remaining fuel) of the intelligent driving vehicle with the environment information (such as current position, position and distance of nearby gas stations) to formulate an optimal path from the current position to the nearest gas station.

S306: pushing execution information of the driving decision to the user.

In this step, in the process of controlling the autonomous mobile device to drive according to the driving decision, the execution information of the driving decision may be pushed to the user, where the execution information includes a current operation being executed by the autonomous mobile device, and/or an expected operation to be executed.

Optionally, the execution information of the driving decision may be displayed to the user through a visual interface, and/or reminded to the user through a voice prompt.

For example, on an in-vehicle display screen of the intelligent driving vehicle, an adjustment process of increasing the driving speed from 60 km/h to 80 km/h may be dynamically displayed. When the vehicle is overtaking, the in-vehicle display screen may highlight the current position of the vehicle, the target lane, and the expected path to overtake the vehicle A.

Meanwhile, a voice prompt may provide the user with real-time information, for example, "please note that the driving speed of the intelligent driving vehicle is increasing to 80 km/h", or "prepare to change to the left-side lane to overtake the preceding vehicle".

Optionally, when the voice instruction of the user does not match an operation that can be safely executed in the current scenario, the intelligent driving system will prioritize safe driving, and push the execution information of the driving decision to the user through a voice prompt. For example, the user is informed by voice that the overtaking operation is unsafe because there is an obstacle in the left-side lane or a yellow solid line, and the vehicle is driving in the current lane while maintaining a safe distance.

In the embodiments of the present application, the electronic device can acquire the driving environment information collected during the movement process of the autonomous mobile device, and acquire the voice data input by the user through the audio collection device. The voice data and the driving environment information are possessed through the visual language large model to generate the target feature vector. The driver-assistance model can process the target feature vector to generate the driving decision. Then the autonomous mobile device can be controlled to drive according to the driving decision, and the execution information of the driving decision can be pushed to the user. In the above process, based on the general understanding capability of the visual language large model, the input is no longer limited to the pre-integrated driving decision interactive interface, but can be performed in a natural language dialog manner. The visual language large model can combine such input with an actual driving scenario to generate the feature vector for use by the driver-assistance model. The driver-assistance model can generate the driving decision according to the feature vector and execute the corresponding behavior, thereby improving flexibility of the intelligent driving system, so as to meet personalized user needs.

Still further, using the driving decision generation method provided in the embodiments of the present application, the electronic device generates the feature vector through the voice input of the user by using the understanding capability of the visual language large model. Then, the driver-assistance model processes the feature vector, achieving the purpose of the user controlling the behavior of the autonomous mobile device through voice control. The method fully improves the human-machine interaction mode of intelligent driving, and is no longer limited to traditional lever buttons or specified interfaces, but supports natural language interaction in all scenarios, thereby greatly improving the usability of the intelligent driving product and the flexibility in user usage.

In a possible design, based on any one of the above embodiments, the driving decision generation method may further include: receiving the data processing model sent by a server, and deploying the data processing model.

On the one hand, after receiving the data processing model sent by the server, the autonomous mobile device may deploy it in the intelligent driving system of the autonomous mobile device, where the data processing model may be obtained by training based on the reinforcement learning model or may be obtained by training based on the multi-modal model and the deep learning model.

On the other hand, in the intelligent driving system, the update and optimization of the data processing model are important links in improving system performance and adaptability. By receiving the new data processing model sent by the server, the autonomous mobile device can acquire the latest algorithm and model updates in time. These updates may include the improved visual language model, driver-assistance model, or other related algorithmic modules.

In an optional implementation, the server may periodically push the trained and optimized new data processing model to the autonomous mobile device. The new data processing model may be updated based on the latest driving data, user feedback, or technical advancements. After receiving the new model, the autonomous mobile device may automatically deploy it to replace or enhance the existing model.

In another optional implementation, after receiving the new data processing model, the autonomous mobile device may display the new data processing model in the visual interface, thereby allowing the user to understand and select whether to apply these updates.

For example, after receiving the new data processing model, the electronic device of the autonomous mobile device may display related information of the new model on the in-vehicle display screen, such as a version number of the model, updated contents, improvement points, and expected performance improvement, so as to help the user understand advantages and changes of the new model. The user may deploy the new model through installation options provided on the in-vehicle display screen.

In the embodiments of the present application, by deploying the advanced data processing model, the autonomous mobile device can efficiently process the voice data and the driving environment information, and generate the driving decision to control the autonomous mobile devices to drive. In addition, by periodically receiving and deploying the latest data processing model sent by the server, the autonomous mobile device can continuously optimize its performance and adaptability, thereby maintaining efficient operation under continuously changing driving conditions, and providing a more fluent and personalized driving experience for the user.

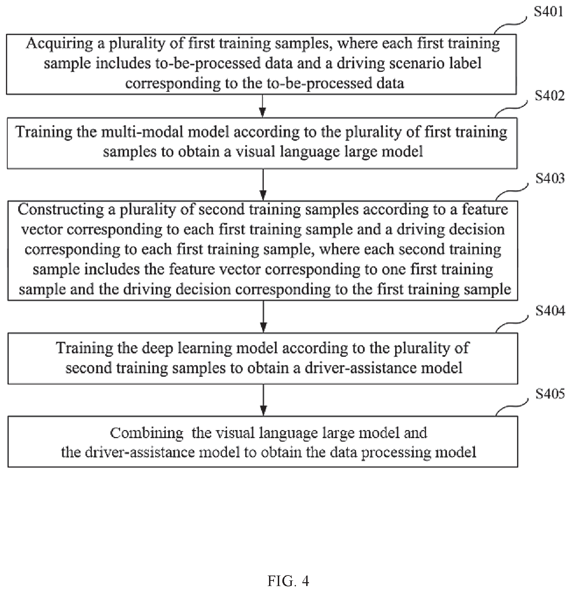

Based on the embodiment shown in FIG. 2 or FIG. 3, a training process of the data processing model is described in detail with reference to FIG. 4. The training process of the data processing model may be carried out on the server.

FIG. 4 is a schematic flow chart of a first embodiment of a model training method for a driving decision according to the present application. Please refer to FIG. 4. A data processing model is obtained by training based on a multi-modal model and a deep learning model. The method may include the following steps.

S401, acquiring a plurality of first training samples, where each first training sample includes to-be-processed data and a driving scenario label corresponding to the to-be-processed data.

In this step, the server may acquire a plurality of first training samples, and each training sample includes the to-be-processed data and the driving scenario label corresponding to the to-be-processed data. The to-be-processed data includes voice data input by a user and driving environment information, where the driving environment information includes at least one of the following: motion state information of an autonomous mobile device, motion state information of a surrounding traffic participant, and road information.

Optionally, the driving scenario label includes a category of a driving scenario and a state of the autonomous mobile device, where the category of the driving scenario includes, but is not limited to: overtaking, detouring, accelerating, decelerating, or lane changing, and the state of the autonomous mobile device includes, but is not limited to: a preparation state, an execution state, or a completion state.

For example, a scenario label 1 may be that the intelligent driving vehicle is preparing for overtaking, a scenario label 2 may be that the intelligent driving vehicle is accelerating, and the scenario label 2 may be that the intelligent driving vehicle has completed lane changing.

Optionally, the server may acquire the driving environment information of the autonomous mobile device in various manners such as mobile application uploading, application programming interface (Application Programming Interface, API), cloud storage service, Internet of things platform, data synchronization mechanism, or third-party service integration, etc.

The corresponding voice data may be added to each piece of driving environment information through a scenario annotation system. Further, a common scenario label may also be added to each piece of driving environment information and the voice data corresponding to each driving environment through the scenario annotation system.

For example, the server may acquire a plurality of first training samples including a first training sample 1, where the first training sample 1 may include driving environment information 1, the driving environment information 1 corresponds to voice data 1, and the driving environment information 1 and the voice data 1 correspond to a common scenario label 1. The driving environment information 1 may include that: the driving speed of the intelligent driving vehicle is 60 kilometers per hour (km/h), the driving speed of the preceding vehicle A is 30 km/h, and there is no other vehicle in the left-side lane of the current lane. The voice data 1 may include: overtake the preceding vehicle A, and the scenario label 1 may include that: the intelligent driving vehicle is preparing for overtaking.

S402, training the multi-modal model according to the plurality of first training samples to obtain a visual language large model.

In this step, according to the plurality of first training samples, the multi-modal model may be trained by using the scenario label (including the category of the driving scenario and the state of the autonomous mobile device), the voice data input by the user, and the driving environment information that are included in the samples, to obtain the visual language large model.

Optionally, by training the multi-modal model, the multi-modal model can acquire a universal behavior understanding capability of intelligent driving scenarios, and achieve outputting of the feature vector corresponding to the scenario label according to the inputs such as a natural language and driving environment information (such as panoramic area image, driving speed and trajectory).

Regarding the feature vector, it may be an intermediate result (an implicit feature vector) output from a target layer of the multi-modal model, and the target layer may be a feature processing layer with the most abundant semantics in the multi-modal model or a feature processing layer that is a preset number of layers away from an output layer.

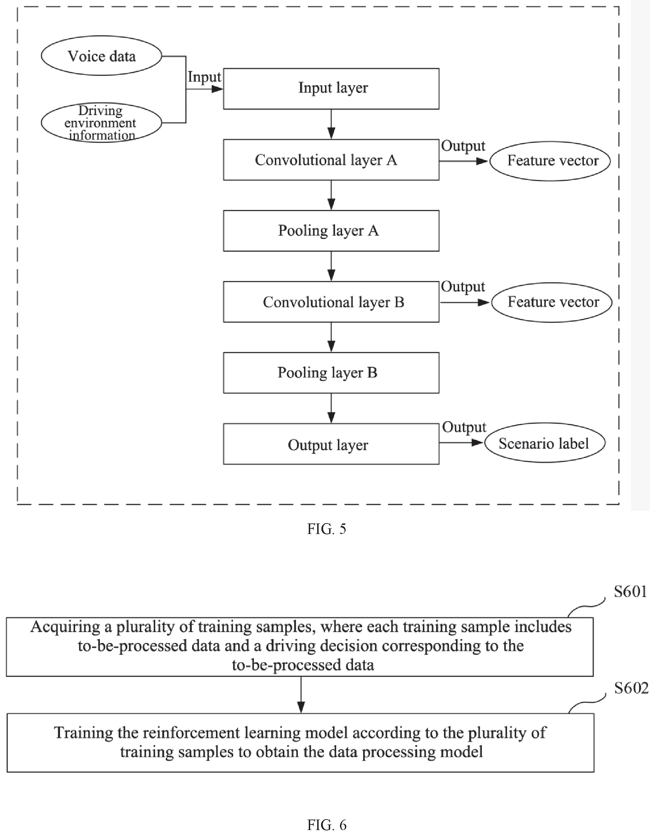

FIG. 5 is a schematic structural diagram of a multi-modal model according to an embodiment of the present application. Please refer to FIG. 5, the multi-modal model may include an input layer, a convolution layer A, a pooling layer A, a convolution layer B, a pooling layer B, and an output layer, where the input layer is used to receive voice data and driving environment information, and the output layer is used to output a scenario label corresponding to the voice data and the driving environment information. If the convolution layer A is the feature processing layer with the most abundant semantics in the multi-modal model, then the feature vector corresponding to the scenario label may be output through the convolution layer A.

Optionally, if a feature processing layer that is a preset distance of two layers away from the output layer is selected as the target layer, the target layer may be the convolution layer B, and then the feature vector corresponding to the scenario label may be output through the convolution layer B.

S403, constructing a plurality of second training samples according to the feature vector corresponding to each first training sample and the driving decision corresponding to each first training sample, where each second training sample includes the feature vector corresponding to one first training sample and the driving decision corresponding to the first training sample.

In this step, after the feature vector corresponding to each first training sample is acquired through the multi-modal model, the plurality of second training samples may be constructed according to the feature vector corresponding to each first training sample and the driving decision corresponding to each first training sample, where each second training sample includes the feature vector corresponding to one first training sample and the driving decision corresponding to the first training sample.

For example, a feature vector 1 is output by the feature processing layer with the most abundant semantics in the multi-modal model, and the first training sample 1 used for obtaining the feature vector 1 may have a corresponding driving decision 1. A second training sample 1 may be constructed through the feature vector 1 and the driving decision 1. The driving decision 1 may be an ego-vehicle trajectory of the intelligent driving vehicle for executing the overtaking decision.

S404: training the deep learning model according to the plurality of second training samples to obtain a driver-assistance model.

In this step, the deep learning model may be trained according to the constructed plurality of second training samples to obtain the driver-assistance model. Optionally, the deep learning model may be a learning model employing a convolutional neural network structure.

In another optional implementation, the driver-assistance model may also be obtained by training an artificial intelligence (Artificial Intelligence, AI) model. By training the AI model, the obtained driver-assistance model can effectively adapt to the requirements for driving tasks, thereby improving the decision capability and performance thereof in actual driving environments.

S405, combining the visual language large model and the driver-assistance model to obtain the data processing model.

In this step, the trained visual language large model and the driver-assistance model are combined, so that a comprehensive data processing model can be constructed. This model can generate a corresponding driving decision according to the voice data input by the user and the pre-acquired driving environment information.

In the embodiments of the present application, the plurality of first training samples can be acquired, where each sample includes to-be-processed data and the driving scenario label corresponding thereto. By using the plurality of first training samples to train the multi-modal model, the visual language large model can be obtained. Then, according to the feature vector of each first training sample and the corresponding driving decision, the plurality of second training samples are constructed, where each second training sample includes one feature vector and the corresponding driving decision. By using the plurality of second training samples to train the deep learning model, the driver-assistance model can be obtained. Finally, by combining the visual language large model and the driver-assistance model, the data processing model can be generated. In the above process, by jointly training the multi-modal model and the deep learning model, the feature vector generated by the multi-modal model is transferred to the deep learning model. By learning the correlation between these features and the driving trajectories, the deep learning model can learn to output the corresponding driving behavior and trajectory output according to the feature vector provided by the multi-modal model. Such joint training can improve the understanding and decision-making capability of the model in complex scenarios, so that the model can make more accurate and reliable judgments according to the voice data of the user and the variable driving environments.

FIG. 6 is a schematic flow chart of a second embodiment of a model training method for a driving decision according to the present application. Please refer to FIG. 6. A data processing model is obtained by training based on a reinforcement learning model. The method may include the following steps.

S601, acquiring a plurality of training samples, where each training sample includes to-be-processed data and a driving decision corresponding to the to-be-processed data.

In this step, the server may acquire the plurality of training samples, each training sample includes the to-be-processed data and the driving decision corresponding to the to-be-processed data, where the to-be-processed data includes voice data input by a user and driving environment information, and the driving environment information includes at least one of the following: motion state information of an autonomous mobile device, motion state information of a surrounding traffic participant, and road information.

For example, the server may acquire the plurality of training samples including a training sample 1 and a training sample 2, where the training sample 1 may include driving environment information 1, voice data 1 corresponding to the driving environment information 1, and a driving decision 1 corresponding to the driving environment information 1 and the voice data 1. The driving environment information 1 may include that: the driving speed of the intelligent driving vehicle is 60 kilometers per hour (km/h), the driving speed of the preceding vehicle A is 30 km/h, and there is no other vehicle in the left-side lane of the current lane. The voice data 1 may include: overtake the preceding vehicle A, and the driving decision 1 may be an overtaking decision. The training sample 2 may include driving environment information 2, voice data 2 corresponding to the driving environment information 2, and a driving decision 2 corresponding to the driving environment information 2 and the voice data 2. The driving environment information 2 may include that: the driving speed of the intelligent driving vehicle is 20 km/h, and there is a traffic cone in front of the intelligent driving vehicle. The voice data 2 may include: bypass the obstacle "traffic cone", and the driving decision 2 may an obstacle bypassing decision.

S602, training the reinforcement learning model according to the plurality of training samples to obtain a data processing model.

In this step, the reinforcement learning model may be trained according to the plurality of training samples to obtain the data processing model. Optionally, the reinforcement learning model may be a learning model adopting a deep Q network structure.

In addition, the data processing model may also be obtained by training an AI model.

In the embodiments of the present application, the plurality of training samples are acquired, where each sample includes the to-be-processed data and the driving decision corresponding thereto, and the to-be-processed data includes the voice data input by the user and the driving environment information. The server can train the reinforcement learning model to generate the data processing model. The generated data processing model can accurately capture user intentions and generate driving decisions that meet personalized user needs based on the driving environment information, thereby improving user driving experience.

In one possible design, based on any of the above embodiments of the model training method, the model training method for the driving decision may further include: sending the data processing model to at least one autonomous mobile device.

On the one hand, the server may send the data processing model, which is obtained by training based on the reinforcement learning model or based on the multi-modal model and the deep learning model, to the autonomous mobile device, and after receiving the data processing model sent by the server, the autonomous mobile device may deploy the data processing model in the intelligent driving system of the autonomous mobile device.

On the other hand, the server may send the updated and optimized new data processing model to at least one autonomous mobile device according to a preset period. For example, a fixed time interval (such as one month) may be set in the server to periodically send the updated and optimized data processing model to at least one autonomous mobile device.

In the embodiments of the present application, by deploying the data processing model obtained by training in the autonomous mobile device, the autonomous mobile device can have an understanding capability similar to that of the user, including recognizing relationships between various elements in the road environment, and understanding how to drive in these driving environments. In addition, the autonomous mobile device can also assess the impact of various sudden anomalies on operations thereof, thereby making more accurate and safe driving decisions in complex and dynamic traffic environments.

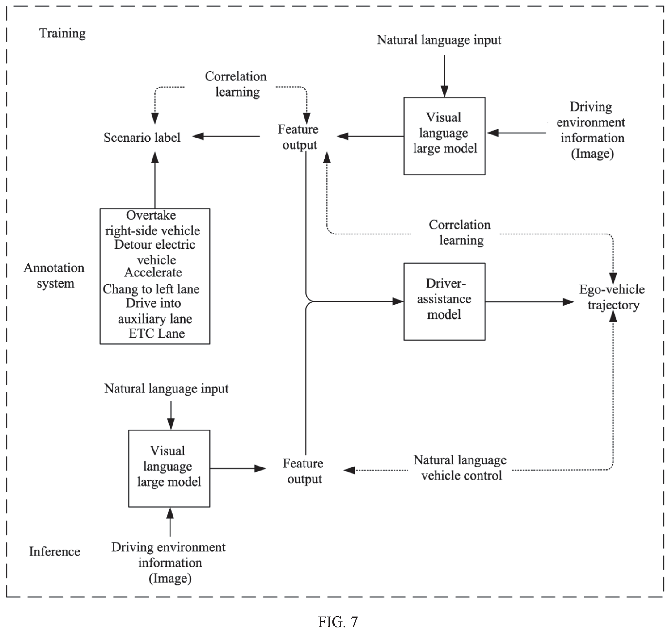

FIG. 7 is a schematic example diagram of training and application of a data processing model according to an embodiment of the present application. Please refer to FIG. 7. A data processing model is obtained by training based on a multi-modal model and a deep learning model, and the autonomous mobile device is an intelligent driving vehicle. Two processes, namely, training and inference, are included.

During the training process, the category of the driving scenario, the state of the intelligent driving vehicle and the ego-vehicle behavior may be manually annotated based on a scenario annotation system to obtain a driving scenario label, where the driving scenario label may include the category of the driving scenario and the state of the intelligent driving vehicle. The category of the driving scenario may include overtaking a right-side vehicle, detouring an electric vehicle, accelerating, changing to the left lane, driving into the auxiliary lane, driving into the electronic toll collection (ETC) lane. The state of the intelligent driving vehicle may include a preparation state, an execution state, or a completion state. The ego-vehicle behavior may be acquired through an actual driving trajectory generated when the user drives the vehicle.

The visual language large model may be obtained by training the multi-modal model through natural language input, driving environment information and the scenario label, where the natural language input may be voice data input by a user, and the driving environment information may include image data collected by a camera of the intelligent driving vehicle.

Further, according to feature outputs (feature vectors) of the visual language large model and the ego-vehicle trajectory, the deep learning model may be trained to obtain the driver-assistance model.

During the inference process, the visual language large model and the driver-assistance model that are obtained by training may be deployed in the intelligent driving system of the autonomous mobile device. During the operation of the intelligent driving system, the natural language input and the pre-acquired driving environment information may be processed to obtain driving decisions meeting personalized user needs, thereby achieving the purpose of controlling the intelligent driving vehicle through the natural language input.

It should be noted that the training data in the training samples all come from high-quality artificial annotation and human-driving trajectories, so there is a strong correlation between voice data, real-vehicle scenarios, and execution trajectories. After the data processing module is deployed in the intelligent driving system of the autonomous mobile device, even if the user inputs voice data that conflicts with the scenario, the intelligent driving system may automatically ignore the voice data, instead of violating physical laws. For example, in a road section without an auxiliary lane, if the user inputs the voice data "drive into the auxiliary lane" and wants to enter the auxiliary lane, the intelligent driving system will not control the autonomous mobile device to move towards the roadside; and at an intersection with traffic lights or when the preceding vehicle slows down, if the user inputs the voice data "increase the driving speed", the intelligent driving system will not control the autonomous mobile device to forcibly accelerate in violation of safety and traffic regulations.

In the examples of the present application, the scenario label, the category of the driving scenario, and the state of the intelligent driving vehicle may be used to train the multi-modal model to obtain the visual language large model, so that the visual language large model acquires a universal behavior understanding capability of automatic driving scenarios. According to the input of natural language and driving environment information, the feature output corresponding to the scenario label is outputted. The multi-modal model and the deep learning model are jointly trained. During the training process, the features of the multi-modal model may be output to the deep learning model, and the deep learning model learns the correlation between the feature output of the multi-modal model and the driving trajectory, so that the driver-assistance model obtained by training based on the deep learning model can output corresponding behaviors and trajectories based on the feature output of the visual language large model.

Further, by deploying the visual language large model and the driver-assistance model on the vehicle side, the multi-modal interactive control based on natural voice instructions can be achieved. The user needs are collected through a voice interaction portal, the visual language large model is utilized for environmental perception and semantic understanding, and the driver-assistance model is driven after feature fusion to generate corresponding driving decisions, thereby completing a full-link closed loop of "voice-vision-behavior". This innovative interaction paradigm breaks through the limitations of traditional lever interaction, and achieves full-scenario natural language interaction, thereby enhancing the freedom of the user in operating the intelligent driving system through the intuitiveness of natural language interaction, and improving the usability and flexibility of intelligent driving products.

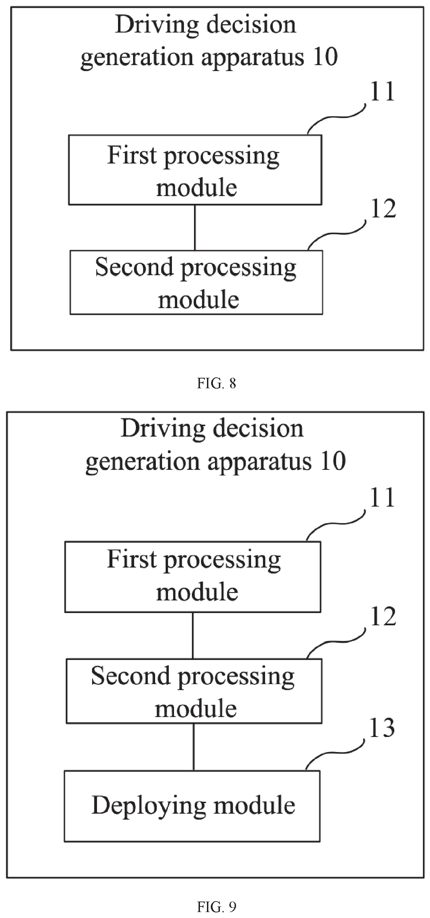

FIG. 8 is a schematic structural diagram of a first embodiment of a driving decision generation apparatus according to the present application. Please refer to FIG. 8, the driving decision generation apparatus 10 includes:
a first processing module 11, configured to process voice data input by a user and pre-acquired driving environment information based on a data processing model to generate a driving decision; where the data processing model is obtained by training based on a reinforcement learning model, or is obtained by training based on a multi-modal model and a deep learning model; and
a second processing module 12, configured to control an autonomous mobile device to drive according to the driving decision.

The driving decision generation apparatus provided in the embodiments of the present application can execute the technical solutions as shown in the above method embodiments, and the implementation principles and beneficial effects thereof are similar and will not be repeated herein.

In a possible implementation, the first processing module 11 is specifically configured to:
process the voice data input by the user and the pre-acquired driving environment information based on a visual language large model to obtain a target feature vector, where the target feature vector is used to represent at least one of the following features: a driving intention feature of the user, a category feature of a driving scenario, a driving style feature, and a state feature of the autonomous mobile device; and
process the target feature vector through a driver-assistance model to generate the driving decision;
where the data processing model is obtained by combining the visual language large model and the driver-assistance model.

In a possible implementation the second processing module 12 is further configured to:
push execution information of the driving decision to the user, where the execution information includes a current operation being executed by the autonomous mobile device and/or an expected operation to be executed.

In a possible implementation, the first processing module 11 is further configured to:
acquire driving environment information collected during a movement process of the autonomous mobile device, where the driving environment information includes at least one of the following: motion state information of the autonomous mobile device, motion state information of a surrounding road traffic participant, and road information;
acquire the voice data input by the user through an audio collecting device in the autonomous mobile device.

In a possible implementation the voice data includes a control instruction and/or a driving style instruction; where
the control instruction include at least one of the following: increasing a driving speed, decreasing the driving speed, overtaking a preceding target, bypassing an obstacle, selecting a target road, driving into an auxiliary lane, and parking at a target area;
the driving style instruction includes at least one of the following: a driving preference of the user, a state of the autonomous mobile device, a state of the user, and a time limit requirement for a driving task.

In a possible implementation the driving decision includes at least one of the following: driving path planning, speed adjustment, overtaking, obstacle avoidance, driving into a target lane, driving into an auxiliary lane, lane keeping, parking, and emergency braking.

FIG. 9 is a schematic structural diagram of a second embodiment of a driving decision generation apparatus according to the present application. Please refer to FIG. 9, based on the embodiment shown in FIG. 8, the driving decision generation apparatus 10 further includes:
a deploying module 13, configured to receive the data processing model sent by a server, and deploy the data processing model.

The driving decision generation apparatus provided in the embodiments of the present application can execute the technical solutions as shown in the above method embodiments, and the implementation principles and beneficial effects thereof are similar and will not be repeated herein.

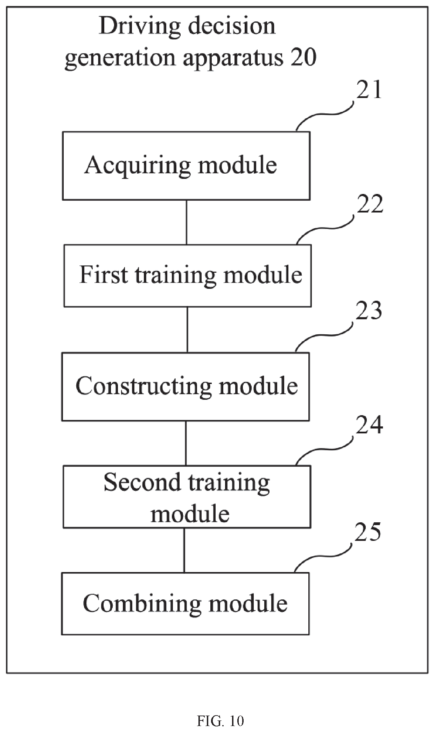

FIG. 10 is a schematic structural diagram of a first embodiment of a model training apparatus for a driving decision according to the present application. Please refer to FIG. 10, the model training device 20 for the driving decision includes:
an acquiring module 21, configured to acquire a plurality of first training samples, where each first training sample includes to-be-processed data and a driving scenario label corresponding to the to-be-processed data; where the to-be-processed data includes voice data input by a user and driving environment information, and the driving environment information includes at least one of the following: motion state information of an autonomous mobile device, motion state information of a surrounding traffic participant, and road information;
a first training module 22, configured to train a multi-modal model according to the plurality of first training samples to obtain a visual language large model;
a constructing module 23, configured to construct a plurality of second training samples according to a feature vector corresponding to each first training sample and a driving decision corresponding to each first training sample, where each second training sample includes a feature vector corresponding to one first training sample and a driving decision corresponding to the first training sample;
a second training module 24, configured to train a deep learning model according to the plurality of second training samples to obtain a driver-assistance model; and
a combining module 25, configured to combine and process the visual language large model and the driver-assistance model to obtain a data processing model.

The model training apparatus for the driving decision provided in the embodiments of the present application can execute the technical solutions as shown in the above method embodiments, and the implementation principles and beneficial effects thereof are similar and will not be repeated herein.

In a possible implementation, the driving scenario label includes a category of a driving scenario and a state of the autonomous mobile device, where the category of the driving scenario is any one of the following: overtaking, detouring, accelerating, decelerating, or lane changing; and the state of the autonomous mobile device includes: a preparation state, an execution state, or a completion state.

In a possible implementation the data processing model is obtained by training based on a reinforcement learning model;
the acquiring module 21 is further configured to acquire a plurality of training samples, where each training sample includes to-be-processed data and a driving decision corresponding to the to-be-processed data; where the to-be-processed data includes voice data input by a user and driving environment information, and the driving environment information includes at least one of the following: motion state information of an autonomous mobile device, motion state information of a surrounding traffic participant, and road information; and
the first training module 22 is further configured to train the reinforcement learning model according to the plurality of training samples to obtain the data processing model.

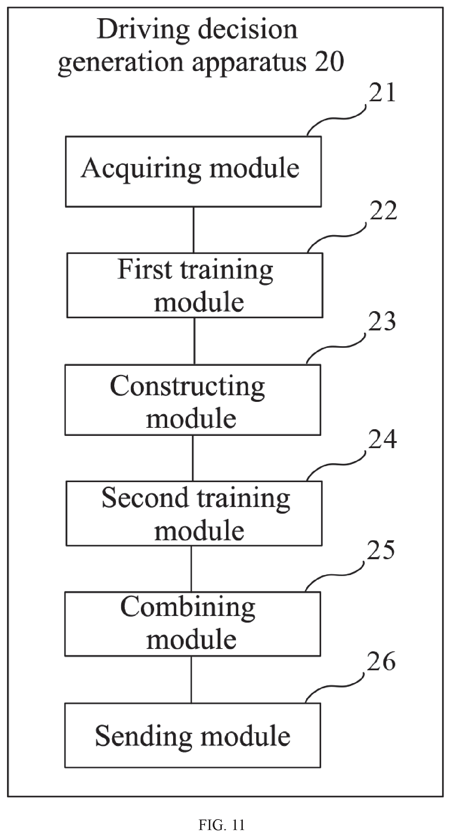

FIG. 11 is a schematic structural diagram of a second embodiment of a model training apparatus for a driving decision according to the present application. On the basis of the embodiment shown in FIG. 10, referring to FIG. 11, the model training apparatus 20 for the driving decision further includes:
a sending module 26, configured to send the data processing model to at least one autonomous mobile device.

The model training apparatus for the driving decision provided in the embodiments of the present application can execute the technical solutions as shown in the above method embodiments, and the implementation principles and beneficial effects thereof are similar and will not be repeated herein.

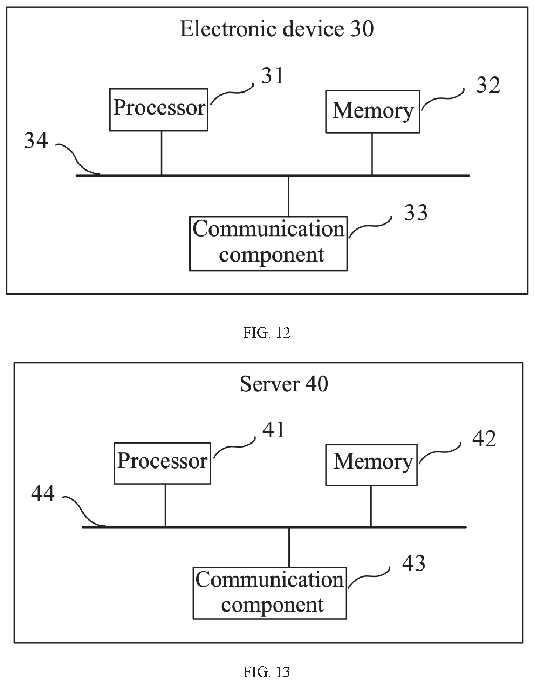

FIG. 12 is a schematic structural diagram of an electronic device according to an embodiment of the present application. Please refer to FIG. 12, the electronic device 30 may include a processor 31, a memory 32, and a communication interface 34. Exemplarily, the processor 31, the memory 32 and the communication interface 34 are connected to each other through a bus 33.

The memory 32 stores computer execution instructions; and
the processor 31 executes the computer execution instructions stored in the memory 32, so that the processor 31 executes the driving decision generation method provided in the above method embodiments, and the implementation principles and beneficial effects thereof are similar and will not be described again here.

The embodiments of the present application provide an autonomous mobile device, including the electronic device as shown in FIG. 12, so as to implement the driving decision generation method in the above method embodiments. The implementation principles and beneficial effects thereof are similar, and will not be described again here.

FIG. 13 is a schematic structural diagram of a server according to an embodiment of the present application. Please refer to FIG. 13, the server 40 may include a processor 41, a memory 42, and a communication interface 44. Exemplarily, the processor 41, the memory 42, and the communication interface 44 are connected to each other through a bus 43.

The memory 32 stores computer execution instructions; and
the processor 31 executes the computer execution instructions stored in the memory 32, so that the processor 41 executes the model training method for the driving decision provided in the above method embodiments, and the implementation principles and beneficial effects thereof are similar and will not be described again here.

The embodiments of the present application provide a computer-readable storage medium, where the computer-readable storage medium stores computer execution instructions which, when being executed by a processor, are used to implement the method described in the above method embodiments.

The embodiments of the present application provide a program product, including a computer program, where when the program product runs on a computer, the computer is enabled to implement the method described in the above method embodiments.

The embodiments of the present application provide a computer program, which, when being executed by a processor, is used to implement the method described in the above method embodiments.

Those skilled in the art shall understand that the embodiments of the present application can be provided as a method, a system or a computer program product. Therefore, the present application may take the form of an entirely hardware embodiment, an entirely software embodiment or an embodiment combining software and hardware. Furthermore, the present application may take the form of a computer program product implemented on one or more computer-usable storage medium (including but not limited to a disk memory, a CD-ROM, an optical memory, etc.) containing computer-usable program codes.

The present application is described with reference to the flowcharts and/or block diagrams of the method, device (system), and computer program product according to the embodiments of the present application. It should be understood that each flow and/or block in the flowcharts and/or block diagrams and combinations of flows and/or blocks in the flowcharts and/or block diagrams can be implemented by computer program instructions. These computer program instructions may be provided to a processor of a general purpose computer, a special purpose computer, an embedded processor or other programmable data processing devices to produce a machine, such that the instructions executed by the processor of the computer or other programmable data processing devices generate an apparatus for implementing the functions specified in one or more processes in the flowcharts and/or one or more blocks in the block diagrams.

These computer program instructions may also be stored in a computer-readable memory capable of guiding a computer or other programmable data processing devices to work in a specific manner, so that the instructions stored in the computer-readable memory generate a manufactured product including an instruction apparatus, and the instruction apparatus implements functions specified in one or more processes in the flowcharts and/or one or more blocks in the block diagrams.

These computer program instructions may also be loaded onto a computer or other programmable data processing devices, causing a series of operational steps to be executed on the computer or other programmable devices to produce computer-implemented processing. Thus, the instructions executed on the computer or other programmable devices provide steps for implementing the functions specified in one or more processes in the flowcharts and/or one or more blocks in the block diagrams.

In a typical configuration, a computing device includes one or more processors (CPUs), an input/output interface, a network interface, and memory.

The memory may include a volatile memory in the computer-readable media, a random access memory (RAM), and/or a non-volatile memory, such as a read-only memory (ROM) or a flash RAM. The memory is an example of the computer-readable media.

The computer-readable media, including persistent and non-persistent, removable and non-removable media, may implement information storage by any method or technology. The information may be computer-readable instructions, data structures, modules of programs, or other data. The examples of the computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only compact disc read-only memory (CD-ROM), digital versatile discs (DVD) or other optical storage, magnetic tape, magnetic disk storage or other magnetic storage devices, or any other non-transmission medium, which can be used to store information that can be accessed by the computing device. According to the definition herein, the computer-readable media do not include transitory computer-readable media, such as modulated data signals and carrier waves.

It should also be noted that the terms "include", "have", or any other variations thereof are intended to cover a non-exclusive inclusion, so that a process, a method, a commodity, or a device that includes a series of elements not only includes those elements, but also includes other elements that are not explicitly listed, or further includes elements inherent to the process, method, commodity, or device. Without further limitations, an element limited by "include a/an/one..." does not exclude the existence of other identical elements in the process, method, commodity, or device that includes the element.

The above descriptions are merely embodiments of the present application, but are not intended to limit the present application. For those skilled in the art, the present application may have various modifications and variations. Any modifications, equivalent replacements, improvements, etc. made within the spirit and principle of the present application shall fall within the scope of the claims of the present application.

## Claims

1. A driving decision generation method, comprising:
processing voice data input by a user and pre-acquired driving environment information based on a data processing model to generate a driving decision; wherein the data processing model is obtained by training based on a reinforcement learning model, or is obtained by training based on a multi-modal model and a deep learning model;
controlling an autonomous mobile device to drive according to the driving decision.

2. The method according to claim 1, wherein the processing the voice data input by the user and the pre-acquired driving environment information based on the data processing model to generate the driving decision comprises:
processing the voice data input by the user and the pre-acquired driving environment information based on a visual language large model to obtain a target feature vector, wherein the target feature vector is used to represent at least one of the following features: a driving intention feature of the user, a category feature of a driving scenario, a driving style feature, and a state feature of the autonomous mobile device;
processing the target feature vector through a driver-assistance model to generate the driving decision;
wherein the data processing model is obtained by combining the visual language large model and the driver-assistance model.

3. The method according to claim 1 or 2, wherein the method further comprises:
pushing execution information of the driving decision to the user, wherein the execution information comprises a current operation being executed by the autonomous mobile device and/or an expected operation to be executed.

4. The method according to any one of claims 1-3, wherein the method further comprises:
acquiring driving environment information collected during a movement process of the autonomous mobile device, wherein the driving environment information comprises at least one of the following: motion state information of the autonomous mobile device, motion state information of a surrounding traffic participant, and road information;
acquiring the voice data input by the user through an audio collecting device in the autonomous mobile device.

5. The method according to any one of claims 1-4, wherein the voice data comprises a control instruction and/or a driving style instruction; wherein
the control instruction comprises at least one of the following: increasing a driving speed, decreasing the driving speed, overtaking a preceding target, bypassing an obstacle, selecting a target road, driving into an auxiliary lane, and parking at a target area;
the driving style instruction comprises at least one of the following: a driving preference of the user, a state of the autonomous mobile device, a state of the user, and a time limit requirement for a driving task.

6. The method according to any one of claims 1-5, wherein the driving decision comprises at least one of the following: driving path planning, speed adjustment, overtaking, obstacle avoidance, driving into a target lane, driving into an auxiliary lane, lane keeping, parking, and emergency braking.

7. The method according to any one of claims 1-6, wherein the method further comprises:
receiving the data processing model sent by a server, and deploying the data processing model.

8. A model training method for a driving decision, wherein a data processing model is obtained by training based on a multi-modal model and a deep learning model, and the method comprises:
acquiring a plurality of first training samples, wherein each first training sample comprises to-be-processed data and a driving scenario label corresponding to the to-be-processed data; wherein the to-be-processed data comprises voice data input by a user and driving environment information, and the driving environment information comprises at least one of the following: motion state information of an autonomous mobile device, motion state information of a surrounding traffic participant, and road information;
training the multi-modal model according to the plurality of first training samples to obtain a visual language large model;
constructing a plurality of second training samples according to a feature vector corresponding to each first training sample and a driving decision corresponding to each first training sample, wherein each second training sample comprises the feature vector corresponding to one first training sample and the driving decision corresponding to the first training sample;
training the deep learning model according to the plurality of second training samples to obtain a driver-assistance model;
combining the visual language large model and the driver-assistance model to obtain the data processing model.

9. The method according to claim 8, wherein the driving scenario label comprises a category of a driving scenario and a state of the autonomous mobile device, wherein the category of the driving scenario is any one of the following: overtaking, detouring, accelerating, decelerating, or lane changing; and the state of the autonomous mobile device comprises: a preparation state, an execution state, or a completion state.

10. The method according to claim 8 or 9, wherein the data processing model is obtained by training based on a reinforcement learning model, and the method further comprises:
acquiring a plurality of training samples, wherein each training sample comprises to-be-processed data and a driving decision corresponding to the to-be-processed data; wherein the to-be-processed data comprises voice data input by a user and driving environment information, and the driving environment information comprises at least one of the following: motion state information of an autonomous mobile device, motion state information of a surrounding traffic participant, and road information;
training the reinforcement learning model according to the plurality of training samples to obtain the data processing model.

11. The method according to claim 8 or 10, wherein the method further comprises:
sending the data processing model to at least one autonomous mobile device.

12. A driving decision generation apparatus, comprising:
a first processing module, configured to process voice data input by a user and pre-acquired driving environment information based on a data processing model to generate a driving decision; wherein the data processing model is obtained by training based on a reinforcement learning model, or is obtained by training based on a multi-modal model and a deep learning model;
a second processing module, configured to control an autonomous mobile device to drive according to the driving decision.

13. A model training apparatus for a driving decision, comprising:
an acquiring module, configured to acquire a plurality of first training samples, wherein each first training sample comprises to-be-processed data and a driving scenario label corresponding to the to-be-processed data; wherein the to-be-processed data comprises voice data input by a user and driving environment information, and the driving environment information comprises at least one of the following: motion state information of an autonomous mobile device, motion state information of a surrounding traffic participant, and road information;
a first training module, configured to train a multi-modal model according to the plurality of first training samples to obtain a visual language large model;
a constructing module, configured to construct a plurality of second training samples according to a feature vector corresponding to each first training sample and a driving decision corresponding to each first training sample, wherein each second training sample comprises the feature vector corresponding to one first training sample and the driving decision corresponding to the first training sample;
a second training module, configured to train a deep learning model according to the plurality of second training samples to obtain a driver-assistance model;
a combining module, configured to combine and process the visual language large model and the driver-assistance model to obtain the data processing model.

14. An electronic device, comprising: a processor, a memory, and a communication interface; wherein
the memory stores computer execution instructions;
the processor executes the computer execution instructions stored in the memory to implement the method according to any one of claims 1-7.

15. An autonomous mobile device, comprising: the electronic device according to claim 14.

16. A server, comprising: a processor, a memory, and a communication interface; wherein
the memory stores computer execution instructions;
the processor executes the computer execution instructions stored in the memory to implement the method according to any one of claims 8-11.

17. A computer-readable storage medium, wherein the computer-readable storage medium stores computer execution instructions which, when being executed by a processor, are used to implement the method according to any one of claims 1-11.

18. A program product, comprising: a computer program, wherein when the program product runs on a computer, the computer is enabled to implement the method according to any one of claims 1-11.

19. A computer program, which, when being executed by a processor, is used to implement the method according to any one of claims 1-11.
